# EUROPEAN PATENT APPLICATION

(11) **EP 4 818 836 A1**
(43) Date of publication of application: **07.10.2026**
(21) Application number: 26168366.8
(22) Date of filing: 27.03.2026
(51) Int. Cl.: G05D 1/242

(54) **AUTOMATIC VESSEL CONTROL SYSTEM**

(30) Priority: 31.03.2025 JP 2025059665; 25.02.2026 JP 2026028251
(71) Applicant: HONDA MOTOR CO., LTD., Tokyo 105-8404 (JP)
(72) Inventor: YAMAMOTO, Yosuke, Saitama, 351-0193 (JP); NOJIRI, Daisuke, Saitama, 351-0193 (JP)
(74) Representative: Kiwit, Benedikt

(57) **Abstract**

Provided is an automatic vessel control system capable of securing route followability while suppressing a calculation amount. The automatic vessel control system that generates a target route (R) on the basis of at least obstacle information and behavioral constraints of a hull, evaluates a degree of match between a predicted trajectory (r) of a ship (20) after a predetermined time when a predetermined operation amount is given to the ship (20) in a predetermined time longer than that of a control cycle and the target route (R), and determines an operation amount divides the predetermined time into a plurality of periods including at least a first period before a change time and a second period after the change time, the operation amount includes a first operation amount that is an operation amount in the first period and a second operation amount that is an operation amount in the second period, the automatic vessel control system changes a ratio between the first period and the second period by changing the change time and predicts the predicted trajectory (r), and the automatic vessel control system evaluates the degree of match between the predicted trajectory (r) and the target route (R), and determines the operation amount.

## Description

### BACKGROUND OF THE INVENTION

### Field of the Invention

The present invention relates to an automatic vessel control system.

### Description of Related Art

In the related art, as a ship steering device for use in automatic docking of a ship, a ship steering device that, by a controller, sets, among positions along a docking location, a nearest position in a current bow direction as a first target position, determines a position separated from the first target position by an offset amount in a direction perpendicular to an edge of the docking location as a second target position, further controls a propulsion device to make the ship reach the second target position, and then controls the propulsion device to make the ship reach the first target position is known.

### [Patent Documents]

[Patent Document 1] PCT International Publication No. WO2018/100749

### SUMMARY OF THE INVENTION

In control of causing the ship to follow a target route in the ship steering device of the related art, because the target route is generated on the basis of obstacle information and behavioral constraints of a hull, and an operation amount is determined for each unit time longer than that of a control cycle that is the minimum unit in which the ship can be controlled, there is demand for increasing following accuracy by reducing a calculation amount, and there is room for improvement from this point of view.

Accordingly, the present invention provides an automatic vessel control systemautomatic vessel control system capable of securing route followability while suppressing a calculation amount.

To solve the above-described problem, an automatic vessel control systemautomatic vessel control system according to the present invention employs the following configurations. (1) An aspect 1 of an automatic vessel control systemautomatic vessel control system according to the present invention is an automatic vessel control systemautomatic vessel control system that generates a target route (R) on the basis of at least obstacle information and behavioral constraints of a hull, evaluates a degree of match between a predicted trajectory (r) of a ship (20) after a predetermined time when a predetermined operation amount is given to the ship (20) in a predetermined time longer than that of a control cycle and the target route (R), and determines an operation amount (Q), in which the automatic vessel control systemautomatic vessel control system divides the predetermined time into a plurality of periods (T1 and T2) including at least a first period (T1) before a change time (ta) and a second period (T2) after the change time (ta), the operation amount (Q) includes a first operation amount (Q1) that is an operation amount in the first period (T1), and a second operation amount (Q2) that is an operation amount in the second period (T2), the automatic vessel control systemautomatic vessel control system changes a ratio between the first period (T1) and the second period (T2) by changing the change time (ta) and predicts the predicted trajectory (r), and the automatic vessel control systemautomatic vessel control system evaluates the degree of match between the predicted trajectory (r) and the target route (R), and determines the operation amount (Q).

With the automatic vessel control systemautomatic vessel control system of the present invention, the predetermined time when the predetermined operation amount is given to the ship in the predetermined time longer than that of the control cycle can be divided into a plurality of periods by the change time, and a route when predetermined operation amounts are given in a first half and a second half of each period can be evaluated. That is, because the degree of match between the predicted trajectory and the target route is evaluated and the operation amount is determined, it is possible to optimize the operation amount. For this reason, it is possible to increase options of a predicted trajectory and increase followability while suppressing a calculation amount according to control.

(2) According to an aspect 2 of the present invention, in the automatic vessel control system of the aspect 1, the change time (ta) may be optimized and calculated.

According to this configuration, it is possible to optimize the predicted trajectory, and to obtain an operation amount having a high degree of match with the target route.

(3) According to an aspect 3 of the present invention, in the automatic vessel control system of the aspect 2, a degree of match between an endpoint (ra) of the predicted trajectory (r) and a point on the target route (R) nearest the endpoint (ra) may be evaluated.

According to this configuration, because an operation amount with the evaluation of the degree of match between the endpoint of the predicted trajectory and the point on the target route nearest the endpoint is obtained, it is possible to further optimize an operation amount.

(4) According to an aspect 4 of the present invention, in the automatic vessel control system of the aspect 3, the target route (R) may include a target speed and a target bow bearing, the predicted trajectory (r) may include at least a predicted ship speed and a predicted bearing at the endpoint (ra), and a degree of match in X coordinate, Y coordinate, ship speed, and bearing between the endpoint (ra) of the predicted trajectory (r) and the point on the target route nearest the endpoint (ra) may be evaluated.

According to this configuration, because it is possible to obtain an operation amount with the evaluation of the degree of match in X coordinate, Y coordinate, ship speed, and bearing between the endpoint of the predicted trajectory and the point on the target route nearest the endpoint taking into consideration information regarding the predicted ship speed and the predicted bearing at the endpoint of the predicted trajectory, it is possible to further optimize an operation amount.

(5) According to an aspect 5 of the present invention, in the automatic vessel control system of the aspect 4, an excess over the target speed may be permitted at a point other than the endpoint (ra) of the predicted trajectory (r).

According to this configuration, it is possible to realize control with a higher degree of freedom.

The automatic vessel control system according to the present invention can secure route followability while suppressing a calculation amount.

### BRIEF DESCRIPTION OF THE DRAWINGS

FIG. 1 is a schematic view showing movement of a ship when automatically navigating using an automatic vessel control system in an embodiment of the present invention.
FIG. 2 is a block diagram showing a configuration of a pier berthing route generation system.
FIG. 3 is a plan view showing disposition of a sensor system on the ship.
FIG. 4 is a flowchart illustrating processing of searching for a pier berthing facility.
FIG. 5 is a schematic view illustrating a control processing operation of a predicted trajectory of the ship.
FIG. 6 is a diagram showing a relationship between a predetermined time and an operation amount in the automatic vessel control system.
FIG. 7 is a diagram showing a relationship between the predetermined time and the operation amount in the automatic vessel control system, and is a diagram in a case where behavior prediction is performed in time increments.
FIG. 8 shows an example of a predicted trajectory calculated in a time increment shown in FIG. 7.
FIG. 9 is a block diagram showing a route control unit provided in the automatic vessel control system.

### DETAILED DESCRIPTION OF THE INVENTION

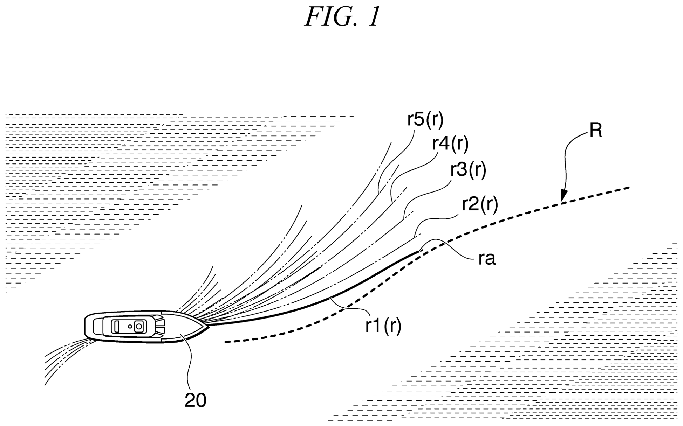

As shown in FIG. 1, an automatic vessel control system 1 is used in a state of being mounted in a ship 20. The automatic vessel control system 1 is a system that generates a target route R on the basis of at least obstacle information D1 and behavioral constraints of a hull, and causes the ship 20 to automatically navigate. In this control, control of evaluating, when an operation amount is given with a predetermined time longer than that of a control cycle described below as a parameter, a degree of match between a predicted trajectory r of the ship 20 after a predetermined time and the target route R and determining an operation amount is performed by a ship steering control unit.

Examples of the ship 20 in which the automatic vessel control system 1 is mounted include a pleasure boat (including a pontoon, a V-hull boat (V-shaped bottom boat), and a sports fishing boat), a fishing boat, a water jet ship, an electrically power-propelled ship, and a hybrid ship, and are not particularly limited. Further, the ship 20 may be a runabout or a personal watercraft. The ship 20 includes a propulsion device such as a screw that rotates with driving power from a driving source such as an engine or an electric motor. The propulsion device is disposed on a stern side of the ship 20. As the propulsion device, an outboard motor, an inboard/outboard motor, an inboard motor, a rim drive, a POD, or the like can be employed. In the present embodiment, a plurality of outboard motors are provided as the propulsion device. A target value of the operation amount calculated by the ship steering control unit is sent to a known FI-ECU of the outboard motor and a controller of a turning device that turns the outboard motor with respect to the hull, via an integrated control unit. The FI-ECU and the controller control an actuator for driving a throttle valve provided in the outboard motor or an actuator of the turning device on the basis of the received target value of the operation amount.

The automatic vessel control system 1 has a sensor system, an HMI system (human-machine interface system), and a ship steering control unit. The ship steering control unit controls the sensor system, the HMI system, an input device, and the propulsion device to generate a pier berthing route for causing the ship to automatically navigate during pier berthing. The HMI system has a multi-function display (MFD).

The ship steering control unit includes a first control unit and a second control unit. The first control unit has a space recognition unit for recognizing an empty space, a self-position recognition unit for recognizing a self-position, an image processing unit that processes an image acquired by cameras or the like, an obstacle recognition unit that recognizes an obstacle, a hull behavior model generation unit, a state management unit, a route generation unit that performs route generation, and a following control unit for following a generated route. The second control unit has a pier berthing facility (berth) recognition unit, a trailer recognition unit, a short distance measurement unit, an obstacle detection unit, a server, a UI display unit, and an IVI function unit.

The ship steering control unit is a one-piece or multi-piece electronic control device provided in the ship. The ship steering control unit includes a circuit and is configured as a computer including a CPU, a ROM, and a RAM. In the ROM, a program for operating the ship steering control unit is stored. The ship steering control unit can be caused to function as each unit of the ship steering control unit by cooperation of the above-described hardware and software.

The sensor system includes LiDARs (external recognition sensor), an IMU, cameras, a trailer recognition camera, GNSS antennas, and an anemometer.

The LiDARs are sensors that measure a distance from a surrounding object and recognize an external world. That is, the LiDARs detect the presence or absence of an object in surroundings with reflected light by emitting pulsed light. When there is an object, the LiDARs detect a bearing and a distance of the object on the basis of a direction of pulsed light when reflected light is received and a time until light reception. The LiDARs acquire point cloud data representing an object in surroundings on the basis of the detection result. The LiDARs are disposed uniformly on the full circumference of 360°. For example, the LiDARs are disposed at four places (respective places on front, back, right, and left sides) at intervals of 90° in a circumferential direction.

The IMU is a sensor that detects movement of the hull. The IMU is disposed near the four LiDARs. For example, the four LiDARs are disposed around the IMU.

The cameras are cameras that capture a video of surroundings of the hull. The cameras also have a function of displaying the captured video or identifying a video and measuring a distance to a close object. The cameras are disposed, for example, on the front, back, right, and left sides of the ship 20, respectively.

The trailer recognition camera detects a trailer tab provided in a trailer. The trailer recognition camera is disposed, for example, on the front side of the ship 20. A known AprilTag may be used as the trailer tab, a relative positional relationship with respect to the trailer can be recognized by recognizing the trailer tab with the trailer recognition camera. In the present embodiment, while the trailer recognition camera and the cameras are provided separately, the trailer tab may be recognized using the cameras.

The GNSS antennas detect a position and a direction of the ship 20. The GNSS antennas receive GNSS radio waves from satellites and acquire a current absolute position (latitude and longitude) of the ship 20 by performing known positioning calculation. GNSS positioning may be single positioning; however, when known DGNSS positioning or real-time kinematic (RTK) positioning is used, it is preferable in that the position of the ship 20 can be acquired with high accuracy. The GNSS antennas are attached in an upper portion of the ship 20 in a state in which there is no object that interferes therewith. The sensor system is provided with a bearing sensor in addition to the GNSS antennas. At the same time that the absolute position of the ship 20 is measured using the GNSS antennas, a ship speed (speed over ground) V is calculated on the basis of a time-series positioning result. The bearing sensor acquires a direction of the bow of the ship. The bearing sensor can be, for example, a magnetic bearing sensor or Satellite Compass.

The anemometer is a sensor that detects a direction and a force of wind. The anemometer is attached to the ship 20 to receive wind from the front.

To the ship steering control unit, external recognition data acquired by the LiDARs, position data of the ship 20 acquired by the GNSS antennas, and bearing data of the ship 20 acquired by the bearing sensor are input.

The pier berthing facility (berth) recognition unit creates a map of obstacles surrounding the ship 20 on the basis of point cloud information acquired by the LiDARs or posture information of the ship 20 acquired by the IMU. That is, obstacle map information is created. With this, it is possible to search for a space greater than the ship 20 at a pier berthing point. Further, after the pier berthing facility is recognized by the cameras, it is possible to recognize a berth by extracting an empty space close to the pier berthing facility.

The movement of the ship 20 based on control by the automatic vessel control system 1 may be performed completely automatically or may be performed through assistance to guide a throttle lever or steering wheel operation to follow the target route R.

Here, in the ship 20, a direction from a bow 20a toward a stern is described as a front-back direction X1, and a direction perpendicular to the front-back direction X1 in a plan view is described as a right-left direction X2.

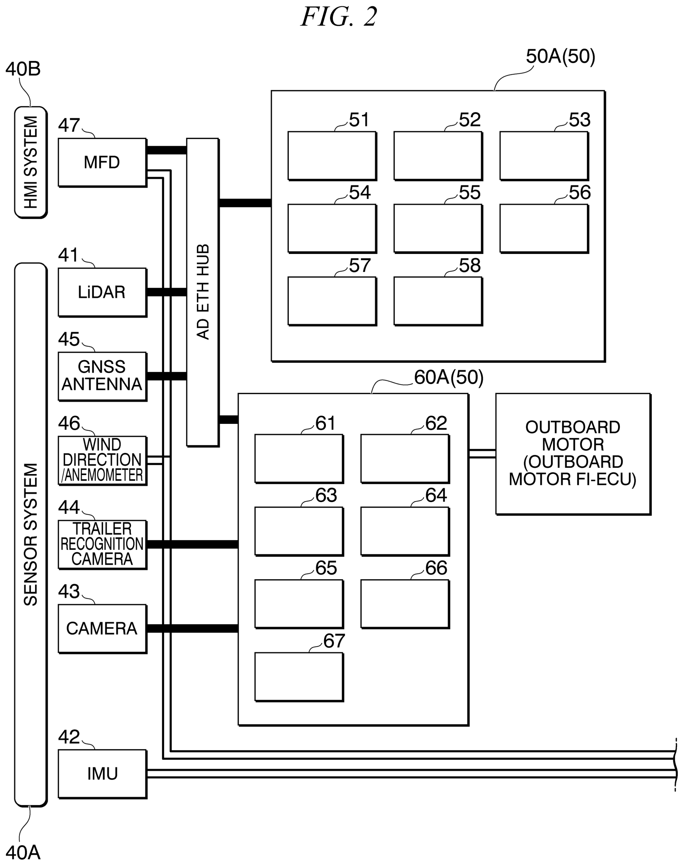

As shown in FIG. 2, the automatic vessel control system 1 has a sensor system 40A, an HMI system 40B (human-machine interface system), and a ship steering control unit 50 (input device). The ship steering control unit 50 controls the sensor system 40A, the HMI system 40B, the input device 50, and the propulsion device to generate a pier berthing route for causing the ship 20 to automatically navigate during pier berthing. The HMI system 40B has a multi-function display (MFD) 47.

The ship steering control unit 50 includes a first control unit 50A and a second control unit 60A. The first control unit 50A has a space recognition unit 51 for recognizing an empty space, a self-position recognition unit 52 for recognizing a self-position, an image processing unit 53 that processes an image acquired by a camera 43 or the like, an obstacle recognition unit 54 that recognizes an obstacle, a hull behavior model generation unit 55, a state management unit 56, a route generation unit 57 that performs route generation, and a following control unit 58 for following a generated route. The second control unit 60A has a pier berthing facility (berth) recognition unit 61, a trailer recognition unit 62, a short distance measurement unit 63, an obstacle detection unit 64, a server 65, a UI display unit 66, and an IVI function unit 67.

The ship steering control unit 50 is a one-piece or multi-piece electronic control device provided in the ship 20. The ship steering control unit 50 includes a circuit, and is configured as a computer including a CPU, a ROM, and a RAM. In the ROM, a program for operating the ship steering control unit 50 is stored. The ship steering control unit 50 (50A, 60A) can be caused to function as each unit of the ship steering control unit 50 by cooperation of the above-described hardware and software.

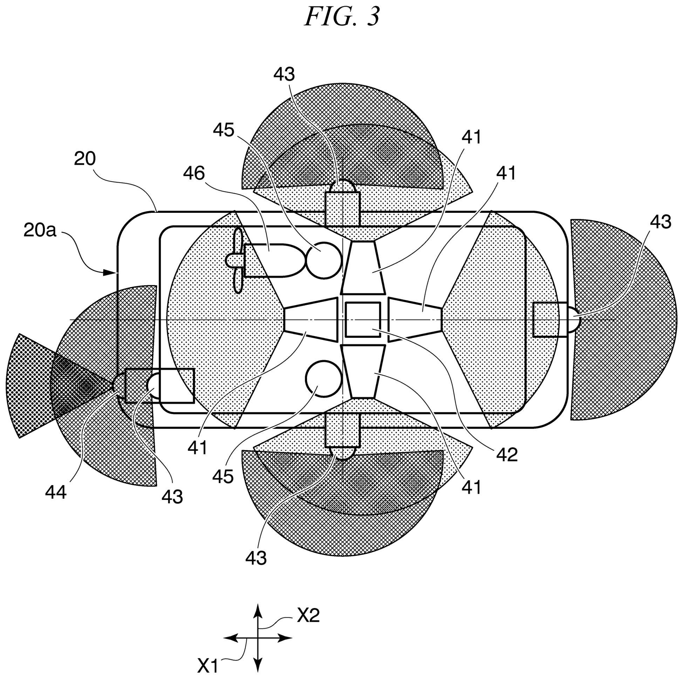

As shown in FIGS. 2 and 3, the sensor system 40A includes LiDARs 41 (external recognition sensor), an IMU 42, cameras 43, a trailer recognition camera 44, GNSS antennas 45, and an anemometer 46.

The LiDARs 41 are sensors that measure a distance to a surrounding object and recognize an external world. That is, the LiDARs 41 detect the presence or absence of an object in surroundings with reflected light by emitting pulsed light. When there is an object, the LiDARs 41 detect a bearing and a distance of the object on the basis of a direction of pulsed light when reflected light is received and a time until light reception. The LiDARs 41 acquire point cloud data representing the object in surroundings on the basis of the detection result. The LiDARs 41 are disposed uniformly on the full circumference of 360°. In FIG. 2, the LiDARs 41 are disposed at four places (respective places on front, back, right, and left sides) at intervals of 90° in a circumferential direction.

The IMU 42 is a sensor that detects movement of the hull. The IMU 42 is disposed near the four LiDARs 41. In FIG. 2, the four LiDARs 41 are disposed around the IMU 42.

The cameras 43 are cameras that capture a video of surroundings of the hull. The cameras 43 also have a function of displaying the captured video or identifying a video and measuring a distance to close an object. The cameras 43 are disposed on the front, back, right, and left sides of the ship 20 in FIG. 2, respectively.

The trailer recognition camera 44 detects a trailer tab provided in a trailer. The trailer recognition camera 44 is disposed on the front side of the ship 20 as shown in FIG. 2. A known AprilTag may be used as the trailer tab, and a relative positional relationship with respect to the trailer can be recognized by recognizing the trailer tab with the trailer recognition camera 44. In the present embodiment, while the trailer recognition camera 44 and the cameras 43 are provided separately, the trailer tab may be recognized using the cameras 43.

The GNSS antennas 45 detect a position and a direction of the ship 20. The GNSS antennas 45 receive GNSS radio waves from satellites and acquire a current absolute position (latitude and longitude) of the ship 20 by performing known positioning calculation. GNSS positioning may be single positioning; however, when known DGNSS positioning or real time kinematic (RTK) positioning is used, it is preferable in that the position of the ship 20 can be acquired with high accuracy. The GNSS antennas 45 are attached to an upper portion of the ship 20 in a state in which there is no object that interferes therewith. The sensor system 40A is provided with a bearing sensor (not shown) in addition to the GNSS antennas 45. At the same time that the absolute position of the ship 20 is measured using the GNSS antennas 45, a ship speed (speed over ground) V is calculated on the basis of a time-series positioning result. The bearing sensor acquires a direction of the bow of the ship 20. The bearing sensor can be, for example, a magnetic bearing sensor or Satellite Compass.

The anemometer 46 is a sensor that detects a direction and a force of wind. The anemometer 46 is attached to the ship 20 to receive wind from the front.

To the ship steering control unit 50, surrounding external recognition data acquired by the LiDARs 41, position data of the ship 20 acquired by the GNSS antennas 45, and bearing data of the ship 20 acquired by the bearing sensor are input.

The pier berthing facility (berth) recognition unit 61 creates a map of obstacles surrounding the ship 20 on the basis of point cloud information acquired by the LiDARs 41 or posture information of the ship 20 acquired by the IMU 42. That is, obstacle map information is created. With this, it is possible to search for a space greater than the ship 20 at a pier berthing point. Further, after the pier berthing facility 30 is recognized by the camera 43, it is possible to recognize a berth by extracting an empty space close to the pier berthing facility 30.

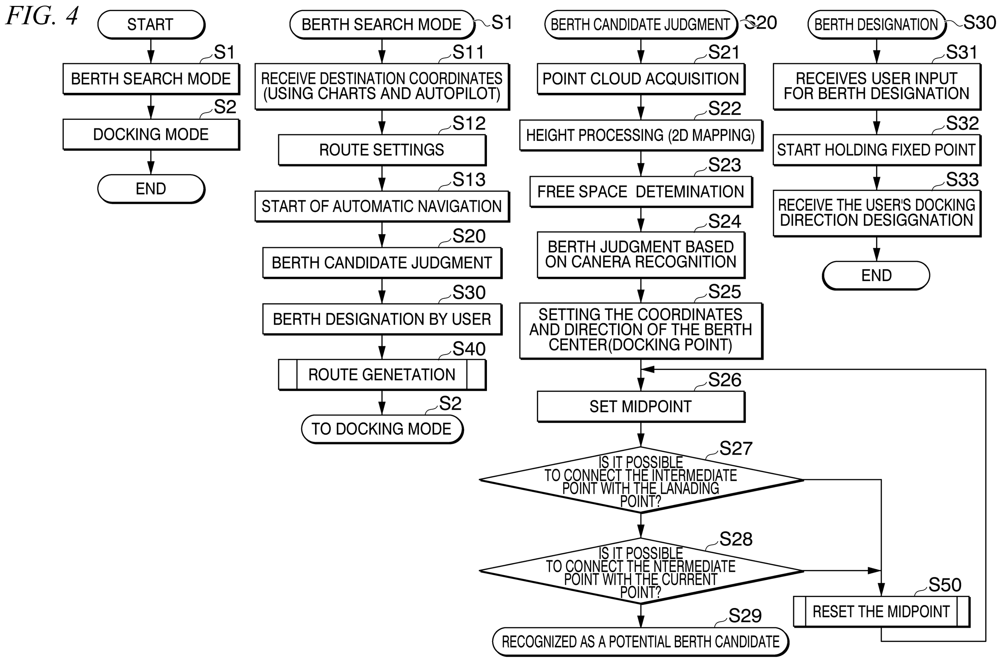

Next, an example of a processing flow by the automatic vessel control system 1 will be described in detail. FIG. 4 is a flowchart illustrating processing of searching for the pier berthing facility 30 (berth).

As shown in FIG. 4, when the processing by the automatic vessel control system 1 is started, in Step S1, a processing flow of a berth search mode is started, and in Step S2, when a pier berthing mode is executed, the flow is finished.

As the berth search mode in Step S1, in Step S11, coordinates of a destination are received. This is performed using a marine chart or an autopilot in the ship steering control unit 50 including the input device. Next, in Step S12, a route (route T0) is set, and in Step S13, automatic navigation is started. Next, the process proceeds to Step S20, and a candidate of a berth (pier berthing facility 30) is determined.

In the berth candidate determination of Step S20, first, in Step S21, a point cloud surrounding the ship 20 is acquired by the LiDARs 41, and height processing of a target position is performed through 2D mapping by two-dimensional processing (Step S22). In this way, the obstacle map (grid map) in which an occupied region occupied by an object and an unoccupied region not occupied by an object are shown is generated. In addition, in Step S23, determination of an empty space is performed. In Step S23, an area of an unoccupied region is determined from the grip map generated in Step S22. An unoccupied region having a width equal to or greater than a first threshold and a length equal to or greater than a second threshold, that is, an empty space, is extracted along a region occupied by an object. Next, in Step S24, determination of a berth is performed in using the cameras 43 in conjunction with image recognition of the cameras 43. In a case where an object near the empty space extracted in Step S23 is a pier berthing facility, the empty space is determined as a berth. Next, coordinates and a bearing of a center (pier berthing point P0) of the berth are set (Step S25), and in Step S26, the midpoint P2 is set.

Next, in Step S27, determination is performed whether the midpoint P2 and the pier berthing point P0 can be connected. In Step S27, in a case where the midpoint P2 and the pier berthing point P0 can be connected (Step S27: YES), the process proceeds to Step S28. On the other hand, in Step S27, in a case where the midpoint P2 and the pier berthing point P0 cannot be connected (Step S27: NO), the process proceeds resetting processing of the midpoint P2 of Step S50. Step S50 will be described below.

In Step S28, determination is performed whether the midpoint P2 and a current place can be connected. In Step S28, in a case where the midpoint P2 and the current place can be connected (Step S28: YES), the process proceeds processing of Step S29, and the berth is recognized as a berth candidate. On the other hand, in Step S28, in a case where the midpoint P2 and the current place cannot be connected (Step S28: NO), the process proceeds to the resetting processing of the midpoint P2 of Step S50.

In an operation flow of the berth candidate determination of Step S20, in Step S29, the berth candidate is recognized. The operation flow of the berth candidate determination of Step S20 is constantly continuously executed in the berth search mode S1. That is, actually, the berth candidate determination is continuously executed in Step S20 until the user designates a berth in Step S30. Then, the berth candidate is not limited to one, and when the berth candidate determination of S20 to S29 is satisfied, two or more berth candidates may be displayed on the MFD 47.

In an operation flow of berth designation of Step S30, first, in Step S31, a berth designation input of the user is received, and in Step S32, fixed-point holding is started. Thereafter, pier berthing direction designation of the user is received (Step S33), and the operation flow of the berth designation in Step S30 is finished.

The automatic vessel control system 1 evaluates, when a predetermined operation amount is given to the ship 20 in a predetermined time longer than that of a control cycle, a degree of match between a predicted trajectory r of the ship 20 after the predetermined time and the target route R, and determines an operation amount Q. Here, the operation amount Q corresponds to the number of times of switching operations, that is, a calculation amount according to control processing.

The control amount refers to the amount of control applied to the outboard motor. Specifically, the control amount consists of the rudder angle and thrust (TH opening and engine speed). The change time, which will be discussed later, is the time required to change the control amount.

Here, the control cycle is control of each Δk (the unit is microseconds). For the control cycle, when first control is defined as K0 and subsequent controls are sequentially defined as K1, K2, K3, ..., a time increment of Δk is made shorter than Δt. For example, when the control cycle is control of 50 milliseconds, the operation amount is 20 times for one second.

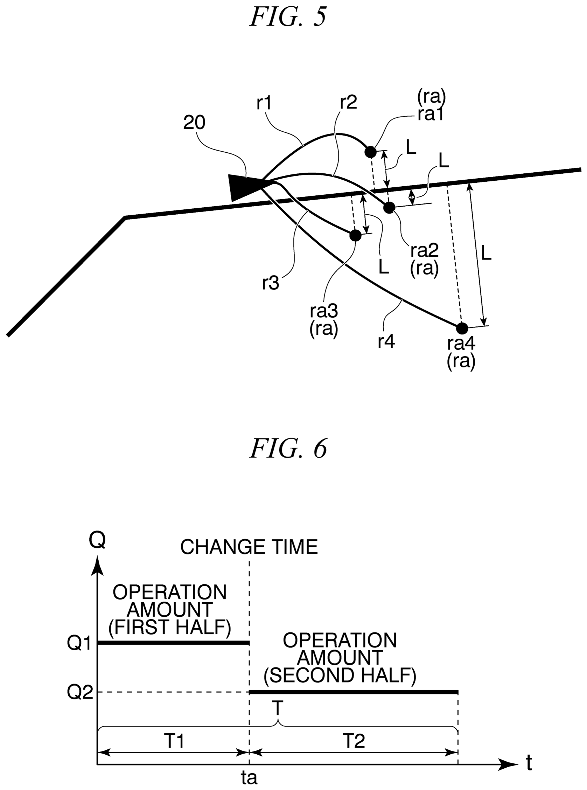

FIG. 5 is a schematic view illustrating a control processing operation of a predicted trajectory of the ship. In FIG. 5, a plurality (in this case, four) of predicted loci r1, r2, r3, and r4 calculated by control processing are shown.

As shown in FIG. 1, the automatic vessel control system 1 includes evaluating a degree of match between endpoints ra of plurality of predicted loci r and points on the target route R nearest the endpoints ra. As the control processing in this case, as shown in FIG. 5, the target route R is made to be a straight line, and a vertical line from each of the endpoints ra (ra1, ra2, ra3, and ra4) of the four predicted loci r1, r2, r3, and r4 to the linear target route R is obtained. The vertical line indicates a shortest distance L from each endpoint ra to the target route R, and control of determining the operation amount Q is performed such that the predicted trajectory r having the small shortest distance L is selected. For example, in FIG. 5, because the shortest distance L from the endpoint ra2 of the predicted trajectory indicated by reference numeral r2 to the target route R is small, the predicted trajectory r2 is selected.

FIG. 6 is a diagram showing a relationship between a predetermined time T and an operation amount Q in the automatic vessel control system 1. In FIG. 6, the horizontal axis indicates a time t, and the vertical axis indicates an operation amount Q. As shown in FIG. 6, the automatic vessel control system 1 executes model prediction control at each predetermined time T. In the present embodiment, the predetermined time T is divided into predetermined periods T1 and T2 including at least a first period T1 before a change time ta and a second period T2 after the change time ta. In the case of division into two periods, the predetermined time is the sum of the first period T1 and the second period T2. The predicted trajectory r is calculated assuming that an operation according to an operation amount Q1 is performed in the first period T1 and an operation according to an operation amount Q2 is performed in the second period T2. Then, a ratio between the first period T1 and the second period T2 is changed by changing the change time ta to predict the predicted trajectory r as shown in FIG. 1, the degree of match between the predicted trajectory r and the target route R is evaluated, and the operation amount is determined. Here, the change time ta is optimized and calculated.

In evaluating the degree of match between the predicted trajectory r and the target route R, it is preferable to evaluate a degree of match between the endpoint ra of the predicted trajectory r and a point on the target route R nearest the endpoint ra.

It is preferable that the target route R includes coordinate information, a target speed, and a target bow bearing.

It is preferable that the predicted trajectory r includes at least a predicted ship speed, a predicted bearing, and predicted coordinates at the endpoint ra. In this case, a degree of match in X coordinate, Y coordinate, ship speed, and bearing between the endpoint ra of the predicted trajectory r and the point on the target route R nearest the endpoint ra is evaluated. Then, an excess over the target speed is permitted at a point other than the endpoint ra of the predicted trajectory r. In regard to the speed, the target speed is set to a value slightly lower than a maximum speed at which the ship should pass through the route. For example, a navigation speed specified in a mariner is set as the target speed. In this case, in a case where the ship speed is equal to or lower than the target speed at the endpoint ra of the predicted trajectory r, the highest evaluation is given uniformly, and only in a case where the ship speed exceeds the target speed, the lowest evaluation is given. In this case, for the predicted trajectory r, as shown in FIG. 5, in comparison of at least the endpoint ra and the nearest point, an entire predicted route has no difference from the target in the X coordinate in the middle of the route other than a final docking point. In this way, the automatic vessel control system 1 becomes a system optimum for a pier berthing operation that requires "accuracy" rather than "quickness", by addressing the above-described target speed and X coordinate.

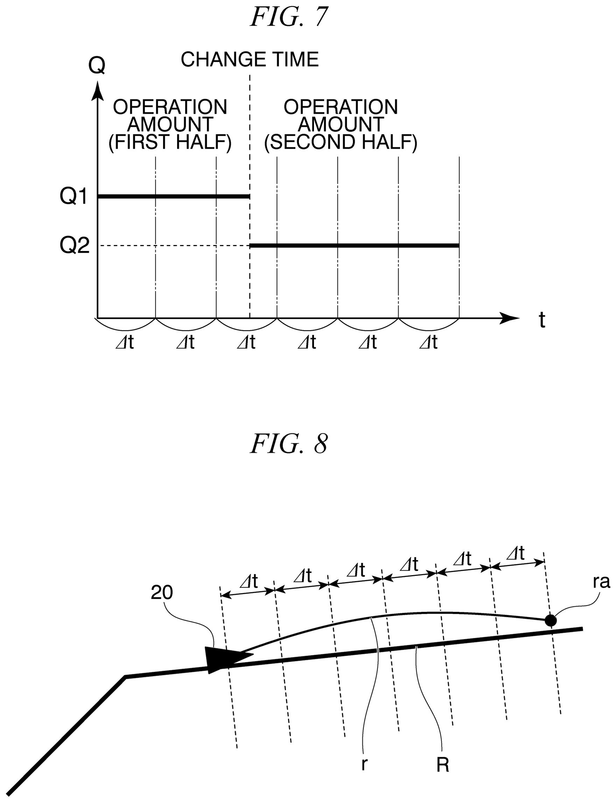

FIG. 7 is a diagram showing a relationship between the predetermined time T and the operation amount Q in the automatic vessel control system 1, and shows an example where behavior prediction is performed in time increments. FIG. 8 shows an example of a predicted trajectory r calculated in a time increment Δt shown in FIG. 7.

The predicted trajectory r is generated by providing an upper limit speed and varying the speed within the upper limit speed. For example, when the predetermined time (n seconds) shown in FIG. 6 is set to 18 seconds, a restriction of acceleration/deceleration to the predetermined time of 18 seconds is provided. As a specific restriction of acceleration/deceleration, deceleration can be performed only in a first half, acceleration can be performed only in a second half, and a switching timing of acceleration/deceleration can be set in units of one second. For example, as shown in FIGS. 7 and 8, the predetermined time n for which the predicted trajectory r is calculated can be set to, for example, 18 seconds, and a time increment Δt can be set to, for example, three seconds in advance. In this case, control of integrating calculation of a reach point (the endpoint ra of the predicted trajectory r) at every three seconds is performed. By shortening the time increment Δt, prediction accuracy increases, but calculation amount increases.

In the example shown in FIG. 6, two operation amounts Q (Q1 and Q2) are set in the first period T1 as a first half and the second period T2 as a second half in the predetermined time T with the change time ta as a reference. That is, there are two operation amount Q in the predetermined time T. A time to change (change time ta) is a variable. For example, it is assumed that an operation amount Q of the outboard motor is an engine rotation speed and a turning angle. In this case, five parameters of the change time, the engine rotation speed (first half), the engine rotation speed (second half), the turning angle (first half), and the turning angle (second half) are used. For example, the engine rotation speed may be set as a parameter at every 500 rpm or 100 rpm, or candidates of the operation amount may be reduced and a calculation amount in calculating the predicted trajectory r may be reduced by setting a lower limit rotation speed (for example, 700 rpm, but not limited thereto) or an upper limit rotation speed (for example, 2000 rpm, but not limited thereto). For example, the turning angle may be set at five degrees or ten degrees, or left turning may be set as a positive number with an upper limit of 30 degrees and right turning may be set as a negative number with a lower limit of -30 degrees. In this control, a combination of the engine rotation speed and the turning angle as described above is set as one operation amount Q, and a plurality of predicted loci r are calculated for each combination of the change time ta, the engine rotation speed, and the turning angle.

As described above, as a selection method (evaluation method) of the predicted trajectory r, evaluation is performed from four points of position coordinates of an X coordinate (traveling direction) and a Y coordinate (width direction), a bearing, and a ship speed, and an optimum predicted trajectory r is selected. An X coordinate (traveling direction), a Y coordinate (width direction), a bow bearing error, and a ship speed error are evaluated for the endpoint ra of the predicted trajectory r and the nearest point on the target route R with respect to the endpoint ra.

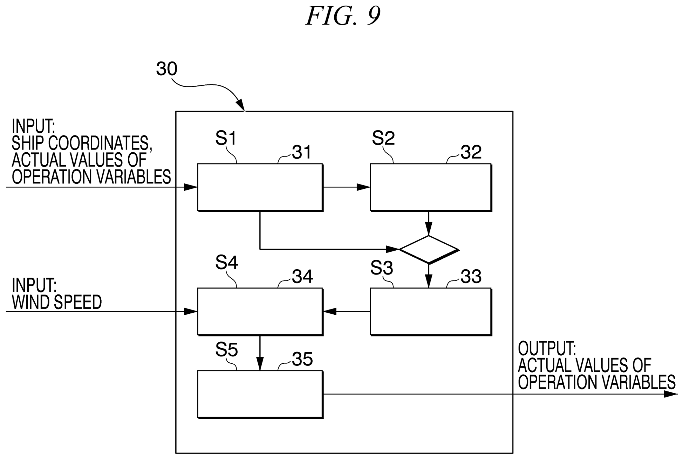

FIG. 9 is a block diagram showing a route control unit 30 provided in the automatic vessel control system 1. As shown in FIG. 9, the automatic vessel control system 1 includes the route control unit 30 in the ship 20. The route control unit 30 has a filter 31, an integral compensator 32, an operation amount generator 33, a hull behavior prediction model 34, and an optimizer 35. The route control unit 30 calculates a target value of an operation amount according to control using the hull behavior prediction model 34.

In an operation flow of calculating the target value of the operation amount Q by the route control unit 30, first, in Step S1, hull coordinates and an actual value of the operation amount Q is input to the filter 31. The filter 31 removes noise with respect to the input values. Subsequently, in Step S2, feedback processing as, for example, a steady-state deviation such as a tide is performed on the input values having passed through the filter 31 by the integral compensator 32. Next, the operation amount generator 33 generates an operation amount candidate group based on the input values and target route information (Step S3).

Thereafter, in Step S4, the hull behavior prediction model 34 is used, and a plurality of predicted loci r (r1, r2, ...) taking into consideration the influence of wind with respect to each operation amount Q of the operation amount candidate group generated in Step S3 are calculated. In this case, information on a wind speed or a wind direction and disturbance such as a tide is input to the hull behavior prediction model 34.

Next, in Step S5, optimization of the predicted trajectory r is performed by the optimizer 35, and the operation amount Q having a high degree of match with the target route R is selected as an output of a final target value. The predicted trajectory indicated by reference numeral r1 among the plurality of predicted loci r1, r2, ... shown in FIG. 1 becomes the predicted trajectory having a high degree of match with the target route R. In this way, in Steps S3 to S5, to respond to a nonlinear multi-input and multi-output system, prediction control using the hull behavior prediction model 34 is performed. In this stage, direct feedback of an error and feedforward of wind are performed. It is possible to follow a route with high responsiveness according to feedforward by calculating a predicted trajectory (local route) taking into consideration the influence of wind.

While the route control unit 30 shown in FIG. 9 performs control of giving the operation amount Q on the basis of information on the wind speed or the wind direction and the tide to predict a hull behavior at every three seconds, it is preferable to perform control of calculating the predicted loci r1, r2, ... on the basis of current speed, bearing, turning angle, and engine rotation speed of the ship 20 as information.

As described above, the automatic vessel control system 1 in the above-described embodiment generates the target route R on the basis of at least the obstacle information and the behavioral constraints of the hull, evaluates the degree of match between the predicted trajectory r of the ship 20 after the predetermined time when the predetermined operation amount is given to the ship 20 in the predetermined time longer than that of the control cycle and the target route R, and determines the operation amount Q. The automatic vessel control system divides the predetermined time into a plurality of periods T including at least the first period T1 before the change time ta and the second period T2 after the change time ta, changes the ratio between the first period T1 and the second period T2 by changing the change time ta to predict the predicted trajectory r, evaluates the degree of match between the predicted trajectory r and the target route R, and determines the operation amount Q.

With the automatic vessel control system 1 according to the present embodiment, the predetermined time when the predetermined operation amount is given to the ship 20 in the predetermined time longer than that of the control cycle can be divided into a plurality of period by the change time ta, and the route when the predetermined operation amount Q is given in the first half and the second half of each period can be evaluated. That is, because the degree of match between the predicted trajectory r and the target route R is evaluated and the operation amount Q is determined, it is possible to optimize the operation amount Q. For this reason, it is possible to increase options of the predicted trajectory r and increase followability while suppressing a calculation amount.

The above-described automatic vessel control system 1 optimizes and calculates the change time t.

According to this configuration, it is possible to optimize the predicted trajectory r, and to obtain an operation amount having a high degree of match with the target route R.

In the above-described automatic vessel control system 1, the degree of match between the endpoint ra of the predicted trajectory r and the point on the target route R nearest the endpoint ra is evaluated.

According to this configuration, it is possible to obtain an appropriate operation amount Q by evaluating the degree of match between the endpoint ra of the predicted trajectory r and the point on the target route R nearest the endpoint ra.

In the above-described automatic vessel control system 1, the target route R includes the target speed and the target bow bearing, the predicted trajectory r includes at least the predicted ship speed and the predicted bearing at the endpoint ra, and the degree of match in X coordinate, Y coordinate, ship speed, and bearing between the endpoint ra of the predicted trajectory r and the point on the target route nearest the endpoint ra is evaluated.

According to this configuration, it is possible to obtain an appropriate operation amount Q by evaluating the degree of match in X coordinate, Y coordinate, ship speed, and bearing between the endpoint ra of the predicted trajectory r and the point on the target route nearest the endpoint ra taking into consideration information regarding the predicted ship speed and the predicted bearing at the endpoint ra of the predicted trajectory r.

In the above-described automatic vessel control system 1, an excess over the target speed is permitted at a point other than the endpoint ra of the predicted trajectory r.

According to this configuration, it is possible to perform control with a higher degree of freedom.

The configuration in the above-described embodiment is an example of the present invention, and various alterations such as substitutions of the components of the embodiment with known components can be made without departing from the spirit and scope of the present invention.

In the above-described embodiment, while control of optimizing and calculating the change time t is performed, the control of optimization may be omitted.

The evaluation of degree of match between the endpoint ra of the predicted trajectory r and the point on the target route R nearest the endpoint ra may also be omitted.

The present invention is not limited to a configuration in which, in the automatic vessel control system 1, the target route R includes the target speed and the target bow bearing, the predicted trajectory r includes at least the predicted ship speed and the predicted bearing at the endpoint ra, and the degree of match in X coordinate, Y coordinate, ship speed, and bearing between the endpoint ra of the predicted trajectory r and the point on the target route nearest the endpoint ra is evaluated.

### EXPLANATION OF REFERENCES

1 Automatic vessel control system
20 Ship
30 Route control unit
R Target route
r Predicted trajectory
ra Endpoint
T1 First period
T2 Second period
t Predetermined time
ta Change time
Q Operation amount

## Claims

1. An automatic vessel control system that generates a target route (R) on the basis of at least obstacle information and behavioral constraints of a hull, evaluates a degree of match between a predicted trajectory (r) of a ship (20) after a predetermined time when a predetermined operation amount is given to the ship (20) in a predetermined time longer than that of a control cycle and the target route (R), and determines an operation amount (Q),
wherein the automatic vessel control system divides the predetermined time into a plurality of periods (T1 and T2) including at least a first period (T1) before a change time (ta) and a second period (T2) after the change time (ta),
the operation amount (Q) includes a first operation amount (Q1) that is an operation amount in the first period (T1) and a second operation amount (Q2) that is an operation amount in the second period (T2),
the automatic vessel control system changes a ratio between the first period (T1) and the second period (T2) by changing the change time (ta) and predicts the predicted trajectory (r), and
the automatic vessel control system evaluates the degree of match between the predicted trajectory (r) and the target route (R), and determines the operation amount (Q).

2. The automatic vessel control system according to claim 1,
wherein the change time (ta) is optimized and calculated.

3. The automatic vessel control system according to claim 2,
wherein a degree of match between an endpoint (ra) of the predicted trajectory (r) and a point on the target route (R) nearest the endpoint (ra) is evaluated.

4. The automatic vessel control system according to claim 3,
wherein the target route (R) includes a target speed and a target bow bearing,
the predicted trajectory (r) includes at least a predicted ship speed and a predicted bearing at the endpoint (ra), and
a degree of match in X coordinate, Y coordinate, ship speed, and bearing between the endpoint (ra) of the predicted trajectory (r) and the point on the target route nearest the endpoint (ra) is evaluated.

5. The automatic vessel control system according to claim 4,
wherein an excess over the target speed is permitted at a point other than the endpoint (ra) of the predicted trajectory (r).
